# EUROPEAN PATENT SPECIFICATION

(11) **EP 1 942 030 B1**
(45) Date of publication and mention of the grant of the patent: **04.01.2012**
(21) Application number: 07122350.7
(22) Date of filing: 05.12.2007
(51) Int. Cl.: B60N 2/56

(54) **Seat for transport vehicle and corresponding transport vehicle**
Sitz für ein Transportfahrzeug und entsprechendes Transportfahrzeug
Siège pour véhicule de transport et véhicule de transport correspondant

(30) Priority: 07.12.2006 FR 0610673
(43) Date of publication of application: 09.07.2008
(73) Proprietor: Iveco France S.A., 69200 Vénissieux (FR)
(72) Inventor: Giudice, Denis Luc Olivier, 69007 Lyon (FR)
(74) Representative: Borsano, Corrado

(56) References cited:
- EP-A1- 1 454 790
- WO-A-2006/034447
- DE-A1- 4 432 497
- US-A- 4 238 135
- US-A- 5 577 458
- US-A1- 2005 161 193

## Description

The present invention concerns a seat for a transport vehicle, as well as a transport vehicle having at least one such seat.

This invention is aimed particularly, but not exclusively, at transport vehicles whose route includes at least one station stop, during which people are likely to board the vehicle, and also to alight from it. According to the invention, said vehicle could possibly be driven on its own tracks, notably by means of electric wires, rails or optic means.

This type of transport vehicle typically includes a chassis mounted on at least one axle having bearing devices, which are usually wheels with tyres. In these conditions, transport vehicles in the sense of the invention include in particular, but not exclusively, buses and also trolleybuses.

More specifically, this invention is aimed at the means by which the passenger compartment of said transport vehicle is heated. Typically, a conduit conveying hot water, coming for example from the circuit powered by the main radiator, runs along the body of the vehicle. It also includes various bypasses extending in the direction of heating units, each of which includes a heat exchanger, a ventilator and a grating for distributing the hot air. Each unit appears in the form of a box secured to the framework of the seats, near the floor.

*An example of abovecited prior art solution is disclosed on patent document* DE 4432497 A1*, in which an heat exchanger and a refrigerator system are mounted externally under a seat of a vehicle, preferably under the driver's seat, in order to provide to the seat base and to the person here seated, a fresh air diffusion, especially passing through the seat padding.*

However, this known solution has certain disadvantages. Indeed, the aforementioned boxes, which form the heating units, form non-functional protuberances, which tend to impede the maintenance of the vehicle, particularly its cleaning. Furthermore, the presence of said boxes is not visually attractive. This having been specified, the invention aims to find a solution for the various disadvantages described above. More specifically, it aims to achieve better integration of the units that heat the vehicle.

To this end, it has as its object a *seat for transport vehicle, comprising a pedestal,* a *seat-based and a seatback, and an heat exchanger allowing the heat exchange between the ambient air of the vehicle and* a *hot fluid, characterised in that the pedestal is made in the form of* a *hollow casing defining an inner space through which air is adapted to flow, said inner space houses said heat exchanger and ventilator means; means (23) for the intake of air to be heated into the inner space as well as means (22) for diffusing the heated air out of the inner space towards the ambient of the vehicle being provided, respectively on at least one face of said pedestal.*

According to other characteristics of the invention:
- the means of diffusion include a grating formed on one face of said pedestal, notably a front face;
- the inner space also houses a ventilator allowing the heated air to be circulated through the means of diffusion;
- the means of intake include fins situated on at least one face of said pedestal, notably on at least one side face of it;
- the hollow casing forming the pedestal has, overall, the form of a triangle, one vertical side of this triangle being able to be place against one side of the body of the vehicle, whereas one horizontal side of this triangle arranged beneath the base of the seat.
- the hollow casing forming the pedestal is made from a composite material, notably in glass-reinforced polyester.

The invention also has as its object a transport vehicle, notably a bus, tram or streetcar, comprising a vehicle body, as well as at least one seat as defined above.

According to other characteristics of the invention:
- there is at least one conduit circulating a warm fluid, which is connected to the heat exchanger with which the or each seat is equipped;
- the or each supply conduit extends along at least one lateral side of the vehicle body;
- the or each conduit includes at least one bypass, discharging into a corresponding heat exchanger;
- the circulation conduit discharges into a circuit of warm fluid linking the engine and the radiator of the vehicle.

The invention will be better understood and other advantages of said invention will become clearer in the light of the following description of a method of realisation of a seat for a transport vehicle according to its principle, given purely by way of non-limitative example and with reference to the annexed drawings, in which:
- figure 1 is a view from above, illustrating in a schematic manner a transport vehicle equipped with seats according to the invention; and
- figures 2 and 3 are perspective views, illustrating the seat of the transport vehicle in figure 1 from two different angles.

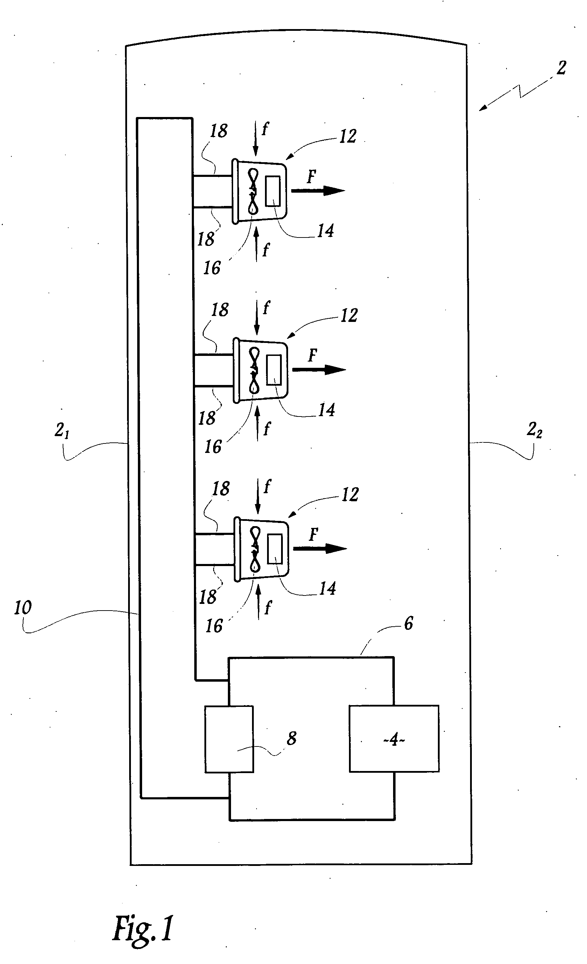

Figure 1 shows, in a schematic manner, the body 2 of a transport vehicle according to the invention, which is seen from above. Said vehicle is equipped with an engine 4, also shown schematically, from which traditionally extends a main circuit 6 for circulating fluid, notably hot water, in the direction of the radiator 8.

Furthermore, a conduit 10 in the shape of a loop, connected to the aforesaid circuit 6, runs along the vehicle body 2, on the side 2₁ of it which does not have a door. However, it could be possible to create another conduit, the same as said conduit 1', which runs along the other side 2₂, which his the side equipped with access doors.

The body 2 of the transport vehicle is also equipped with various seats 12 according to the invention, shown schematically in said figure 1. As will become clear below, each seat has an inner space V, which respectively contains a heat exchanger 14 and a ventilator 16. Various bypasses 18, extending from the conduit 10, also enter each heat exchanger 14.

Figure 1 only shows a limited number of seats 12, it being understood that the vehicle according to the invention may be equipped with any number of seats, on each of said sides 2₁ and 2₂. Furthermore, advantageously, each seat of the vehicle could be equipped with an exchanger 14 and a ventilator 16.

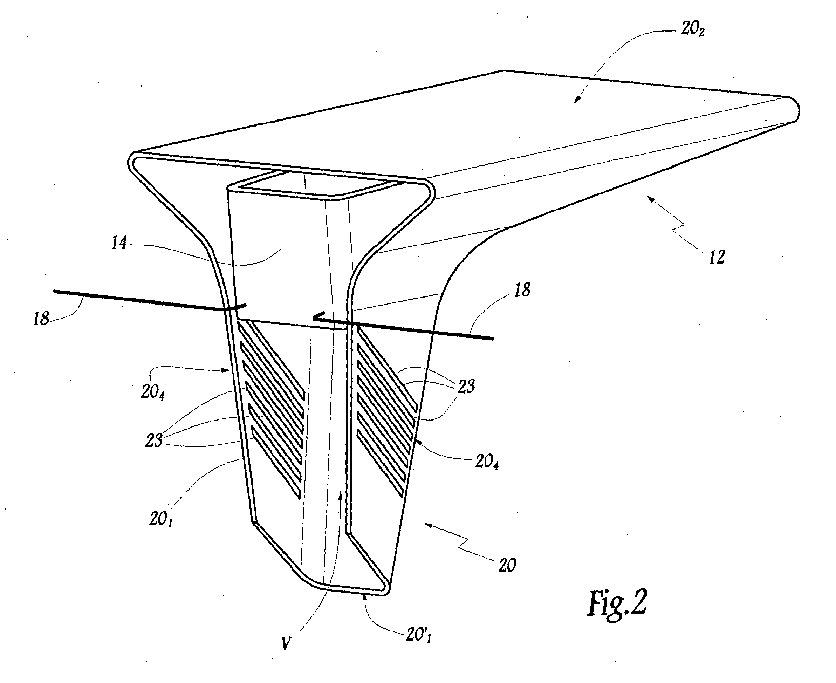

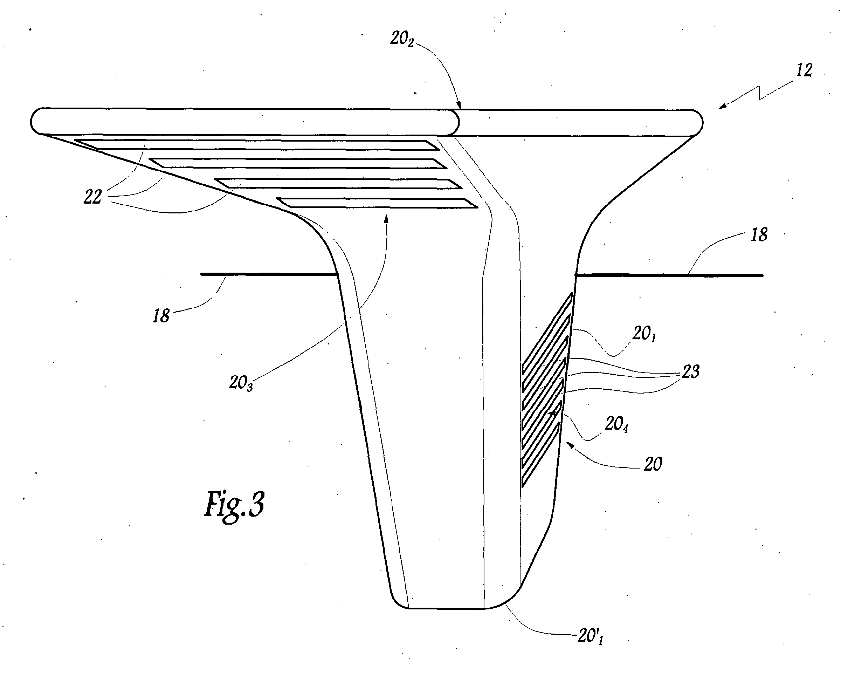

Figures 2 and 3 show more precisely, from two different angles, one of the seats 12 equipping the transport vehicle according to the invention. Said seat 12 firstly includes a pedestal 20, which is formed by a shell made from composite material, such as for example glass-reinforced polyester. The vertical side 20₁ of the pedestal 20, which is shaped approximately like a triangle, is fixed to the lateral side 2₁ of the body 2, using any appropriate means, in particular by means of lock or screw mechanisms that are not shown. The lower angle 20'₁ of the pedestal is fixed to the floor of the body 2, notably by means of screws.

The horizontal side 20₂, in other words the upper side, of the pedestal 20, supports a seat base and seatback, belonging to the seat 12. Said seat base and seatback, which are not shown in the drawings, are of the typical variety.

As mentioned with reference to figure 1, the pedestal 20 defines a hollow casing having an inner space V, which holds the exchanger 14, as well as the ventilator 16 which is not illustrated in figures 2 and 3. Furthermore, said figures 2 and 3 also show the bypass 18, tapped off the conduit 10, which runs into the heat exchanger 14. Lastly, the front face 20₃ of the pedestal 20, in other words the one facing the inside of the passenger compartment, is equipped with an air grating 22, while the lateral faces 20₄ of said pedestal are equipped with fins 23 for air intake.

When running, the hot water in the main circuit 6, connecting the engine 4 with the radiator 8, also circulates into the conduit 10. It is also guided, by the bypasses 18, towards the heat exchangers 14 where said hot water exchanges heat with the air to be heated.

To this end, air to be heated it let in, according to the arrows f, from the passenger compartment into the inner space V, through the intake fins 23. Once this air has been heated in the various heat exchangers 14, it is blown out into the passenger compartment through the various ventilators 16. This flow of hot air, which takes place through the air gratings 22, is illustrated by the arrows F in figure 1.

The invention makes it possible to reach the objective mentioned previously. Indeed, it allows the heating units used in the prior art to be integrated within the pedestals of the vehicle's seats. Consequently, it allows the elimination of the protuberances formed by the isolated heating units present in the state of the art.

In such conditions, the invention provides a significant advantage in terms of aesthetics and maintenance. In addition, thanks to the invention it is possible if need be to have as many heating systems as seats, which ensures a high level of modularity.

## Claims

1. Seat (12) for transport vehicle, comprising a pedestal (20), a seat-based and a seatback, *and an heat exchanger (14) allowing the heat exchange between the ambient air of the vehicle and* a *hot fluid, **characterised in that*** the pedestal (20) is made in the form of a hollow casing defining an inner space (V) *through which air is adapted to flow, said inner space houses said heat exchanger (14) and ventilator means* (16); *means* (23) *for the intake of air to be heated into the inner space (V) as well as means* (22) *for diffusing the heated air out of the inner space (V) towards the passenger compartment of the vehicle being provided, respectively on at least one face (20₃,* 20*₄) of said pedestal (20).*

2. Seat according to claim 1, **characterised in that** said hollow casing forming the pedestal (20) is essentially in the shape of a triangle, of which one vertical side (20₁) of the triangle can be placed against a lateral side (2₁) of the body (2) of the vehicle, whereas one horizontal side (20₂) of the triangle is arranged beneath the seat-base of the seat (12).

3. Seat according to claim 1 or 2, **characterised in that** the means of diffusion of hot air *outside* of the inner space (V) *into the passenger compartment* comprise a grating (22) provided into *front face (20₃)* of said pedestal (20), and the means of air intake include fins (23) placed on at least a lateral face (20₄) of said pedestal (20).

4. Seat according to any one of the previous claims, **characterised in that** the hollow casing forming the pedestal (20) is made of a composite material, notably in glass-reinforced polyester.

5. Transport vehicle, notably a bus, tram or streetcar, comprising a vehicle body (2), as well as at least one seat (12) according to anyone of the previous claims.

6. Vehicle according to claim 5, **characterised in that** it comprises at least one conduit (10) for the circulation of a hot fluid, which is connected to the heat exchanger (14) equipping the or each seat (12).

7. Vehicle according to claim 6, **characterised in that** the or each supply conduit (10) runs along at least one lateral side (2₁, 2₂) of the vehicle body.

8. Vehicle according to claim 6 or 7, **characterised in that** the or each conduit (10) comprises at least one bypass (18), each bypass discharging into a corresponding heat exchanger (14).

9. Vehicle according to any one of claims 6 to 8, **characterised in that** the circulation conduit (10) discharges into a hot water circuit (6) connecting the engine (4) and the vehicle's radiator (8).

## Patentansprüche

1. Sitz (12) für ein Transportfahrzeug, mit einem Sockel (20), einer Sitzbasis und einer Sitzlehne, und einem Wärmetauscher (14), der den Wärmeaustausch zwischen der Umgebungsluft des Fahrzeugs und einem heißen Fluid zulässt,
**dadurch gekennzeichnet, dass**
der Sockel (20) in der Form eines hohlen Gehäuses gefertigt ist, das einen Innenraum (V) definiert, durch den Luft strömen kann, wobei der Innenraum den Wärmetauscher (14) und ein Ventilatormittel (16) aufnimmt; wobei ein Mittel (23) für die Ansaugung von zu erwärmender Luft in den Innenraum (V) wie auch ein Mittel (22) zur Verbreitung der erwärmten Luft aus dem Innenraum (V) zu dem Fahrgastraum des Fahrzeugs hin jeweils an zumindest einer Seite (20₃, 20₄) des Sockels (20) vorgesehen ist.

2. Sitz nach Anspruch 1,
**dadurch gekennzeichnet, dass**
das hohle Gehäuse, das den Sockel (20) bildet, im Wesentlichen die Form eines Dreiecks besitzt, wobei eine vertikale Seite (20₁) des Dreiecks an einer Querseite (2₁) der Karosserie (2) des Fahrzeugs angeordnet sein kann, während eine horizontale Seite (20₂) des Dreiecks unter der Sitzbasis des Sitzes (12) angeordnet ist.

3. Sitz nach einem der Ansprüche 1 oder 2,
**dadurch gekennzeichnet, dass**
das Mittel zur Verbreitung heißer Luft aus dem Innenraum (V) in den Fahrgastraum ein Gitter (22) umfasst, das in der Vorderseite (20₃) des Sockels (20) vorgesehen ist, und das Mittel der Luftansaugung Rippen (23) aufweist, die an zumindest einer Querseite (20₄) des Sockels (20) angeordnet sind.

4. Sitz nach einem der vorhergehenden Ansprüche,
**dadurch gekennzeichnet, dass**
das hohle Gehäuse, das den Sockel (20) bildet, aus einem Komposit- bzw. Verbundmaterial, insbesondere einem glasverstärkten Polyester, besteht.

5. Transportfahrzeug, insbesondere ein Bus, eine Tram oder eine Straßenbahn, mit einer Fahrzeugkarosserie (2) wie auch zumindest einem Sitz (12) nach einem der vorhergehenden Ansprüche.

6. Fahrzeug nach Anspruch 5,
**dadurch gekennzeichnet, dass**
es zumindest eine Leitung (10) für die Zirkulation eines heißen Fluides umfasst, die mit dem Wärmetauscher (14) verbunden ist, der den oder jeden Sitz (12) ausstattet.

7. Fahrzeug nach Anspruch 6,
**dadurch gekennzeichnet, dass**
die oder jede Lieferleitung (10) entlang zumindest einer Querseite (2₁, 2₂) der Fahrzeugkarosserie verläuft.

8. Fahrzeug nach einem der Ansprüche 6 oder 7,
**dadurch gekennzeichnet, dass**
die oder jede Leitung (10) zumindest einen Bypass (18) umfasst, wobei jeder Bypass in einen entsprechenden Wärmetauscher (14) austrägt.

9. Fahrzeug nach einem der Ansprüche 6 bis 8,
**dadurch gekennzeichnet, dass**
die Zirkulationsleitung (10) in einen Heißwasserkreislauf (6) austrägt, der den Motor (4) mit dem Fahrzeugkühler (8) verbindet.

## Revendications

1. Siège (12) pour un véhicule de transport, comprenant un socle (20), une base de siège et un dossier, et un échangeur de chaleur (14) permettant l'échange de chaleur entre l'air ambiant du véhicule et un fluide chaud, **caractérisé en ce que** le socle (20) est réalisé sous la forme d'un boîtier creux définissant un espace interne (V), à travers lequel l'air est apte à s'écouler, ledit espace interne abritant ledit échangeur de chaleur (14) et des moyens de ventilateur (16) ; des moyens (23) pour l'admission d'air à chauffer dans l'espace interne (V) ainsi que des moyens (22) pour diffuser l'air chauffé hors de l'espace interne (V) vers le compartiment passagers du véhicule, respectivement sur au moins une face (20₃, 20₄) dudit socle (20).

2. Siège selon la revendication 1, **caractérisé en ce que** ledit boîtier creux formant le socle (20) est essentiellement en forme de triangle, dont un côté vertical (20₁) du triangle peut être placé contre un côté latéral (2₁) de la carrosserie (2) du véhicule, tandis qu'un côté horizontal (20₂) du triangle est disposé sous la base du siège (12).

3. Siège selon la revendication 1 ou 2, **caractérisé en ce que** les moyens de diffusion de l'air chaud hors de l'espace intérieur (V) dans le compartiment passager comprennent une grille (22) ménagée dans la face avant (20₃) dudit socle (20) et les moyens d'admission d'air comprennent des ailettes (23) placées sur au moins une face latérale (20₄) dudit socle (20).

4. Siège selon l'une quelconque des revendications précédentes, **caractérisé en ce que** le boîtier creux formant le socle (20) est réalisé en un matériau composite, en particulier en polyester renforcé en verre.

5. Véhicule de transport, en particulier un bus, ou un tramway, comprenant une carrosserie de véhicule (2), ainsi qu'au moins un siège (12) selon l'une quelconque des revendications précédentes.

6. Véhicule selon la revendication 5, **caractérisée en ce qu'**il comprend au moins un conduit (10) pour la circulation d'un fluide chaud, qui est raccordé à l'échangeur de chaleur (14) équipant le ou chaque siège (12).

7. Véhicule selon la revendication 6, **caractérisé en ce que** le ou chaque conduit d'alimentation (10) court le long d'au moins un côté latéral (2₁, 2₂) de la carrosserie du véhicule.

8. Véhicule selon la revendication 6 ou 7, **caractérisé en ce que** le ou chaque conduit (10) comprend au moins un bypass (18), chaque bypass se déchargeant dans un échangeur de chaleur correspondant (14).

9. Véhicule selon l'une quelconque des revendications 6 à 8, **caractérisé en ce que** le conduit de circulation (10) se décharge dans un circuit d'eau chaude (6) reliant le moteur (4) et le radiateur du véhicule (8).
